(19) Europäisches Patentamt
European Patent Office
Office européen des brevets

(11) **EP 4 752 019 A1**

(12) **EUROPEAN PATENT APPLICATION**

(43) Date of publication:
03.06.2026 Bulletin 2026/23

(21) Application number: 25219169.7

(22) Date of filing: 27.11.2025

(51) International Patent Classification (IPC):
*B60W 10/08* (2006.01)   *B60C 23/00* (2006.01)
*B60K 1/02* (2006.01)   *B60K 7/00* (2006.01)
*B60W 10/20* (2006.01)   *B60W 50/02* (2012.01)
*B60W 50/029* (2012.01)   *B62D 7/14* (2006.01)

(52) Cooperative Patent Classification (CPC):
**B60W 10/08; B60K 7/0007; B60W 10/20;**
**B60W 50/0205; B60W 50/029; B62D 6/007;**
**B62D 7/159;** B60K 1/02; B60W 2050/021;
B60W 2050/0292; B60W 2520/10; B60W 2520/14;
B60W 2552/40; B60W 2710/207; B60W 2720/406

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 28.11.2024 CN 202411751281

(71) Applicant: **Huawei Digital Power Technologies**
**Co., Ltd.**
**Shenzhen, Guangdong 518043 (CN)**

(72) Inventors:
• **YANG, Lizhou**
**Shenzhen, 518043 (CN)**
• **YANG, Zhao**
**Shenzhen, 518043 (CN)**
• **CHEN, Zhiyin**
**Shenzhen, 518043 (CN)**

(74) Representative: **Gill Jennings & Every LLP**
**The Broadgate Tower**
**20 Primrose Street**
**London EC2A 2ES (GB)**

(54) **VEHICLE CONTROLLER FOR TIRE BLOWOUT CONTROL, CONTROL METHOD FOR TIRE BLOWOUT CONTROL, AND ELECTRIC VEHICLE**

(57)    Provided are a vehicle controller for tire blowout control, a control method for tire blowout control, and an electric vehicle, which relate to the field of new energy vehicles and are applicable to a pure electric vehicle and a hybrid electric vehicle. The vehicle controller is used in an electric vehicle. The electric vehicle includes a rear-wheel steering system, and the rear-wheel steering system is configured to control steering angles of rear wheels of the electric vehicle. The vehicle controller is configured to: after a tire of a front wheel of the electric vehicle blows out in a traveling process in which a vehicle speed of the electric vehicle is greater than a preset vehicle speed, control the rear-wheel steering system to adjust the steering angles of the rear wheels. According to this solution, vehicle stability control may be quickly implemented to effectively control the electric vehicle upon blowout of the tire, thereby improving safety of the vehicle.

FIG. 1

## Description

## TECHNICAL FIELD

This application relates to the field of new energy vehicles, and more specifically, to a vehicle controller for tire blowout control, a control method for tire blowout control, and an electric vehicle.

## BACKGROUND

With development of the vehicle industry, a quantity of vehicles increases annually, and traffic safety increasingly attract attention. Tires, as the only key parts of a vehicle that are directly in contact with the ground, have significant impact on power performance, braking performance, smoothness, manipulation stability, and the like of the vehicle in a traveling process of the vehicle. Once a tire of an electric vehicle blows out in a high-speed traveling process of the electric vehicle, stability and safety of the vehicle are greatly affected. For most home vehicles, a front wheel is used as both a power wheel and a steering wheel. Once a tire of the front wheel blows out, a traveling direction and a traveling trajectory of the vehicle obviously deviate in a very short time. A driver is likely to perform a wrong operation in panic, and it is difficult to control the vehicle. When a speed of the vehicle is high and the driver does not perform steering wheel control, the traveling direction and the traveling trajectory of the vehicle deviate unexpectedly, greatly affecting traveling stability and safety of the vehicle.

Currently, the wheels are usually controlled through a braking system or a drive system, to maintain a balance of stress between a left side and a right side of the vehicle after the tire blows out, thereby controlling the traveling trajectory of the vehicle and a vehicle posture after the tire blows out. However, only a longitudinal force is applied to the wheels, and then yaw torque is generated based on a longitudinal force difference between the left side and the right side to control the traveling posture of the vehicle, with slightly low control efficiency.

Therefore, how to perform effective control when a tire of an electric vehicle blows out is a problem that needs to be resolved.

## SUMMARY

This application provides a vehicle controller for tire blowout control, a control method for tire blowout control, and an electric vehicle. After it is detected that a tire of a front wheel blows out, steering characteristics and a traveling posture of the vehicle are adjusted based on a traveling status of the vehicle by putting a rear-wheel steering function into full play, so that vehicle stability control is quickly implemented to effectively control the electric vehicle upon blowout of the tire, thereby improving safety of the vehicle.

According to a first aspect, this application provides a vehicle controller for tire blowout control. The vehicle controller is used in an electric vehicle. The electric vehicle includes a rear-wheel steering system, and the rear-wheel steering system is configured to control steering angles of rear wheels of the electric vehicle. The vehicle controller is configured to: after a tire of a front wheel of the electric vehicle blows out in a traveling process in which a vehicle speed of the electric vehicle is greater than a preset vehicle speed, control the rear-wheel steering system to adjust the steering angles of the rear wheels.

The vehicle controller in this application may be a motor controller of the electric vehicle, or a vehicle control unit, or a controller that is separately disposed and has a control capability. The vehicle controller is applicable to an electric vehicle or a hybrid electric vehicle. The electric vehicle may be of a distributed or centralized motor architecture, and has a plurality of drive motors and a plurality of motor controllers. The vehicle controller may be any one of the plurality of motor controllers.

The electric vehicle having the rear-wheel steering system may change rotational angles and orientations of two rear wheels, so that steering and manipulability of the vehicle may be effectively adjusted by using different steering manners. When the vehicle speed is low and a steering direction of the rear wheel is opposite to a steering direction of the front wheel, a turning radius may be reduced to improve overall manipulability and flexibility of the vehicle. When the vehicle speed is high and the steering direction of the rear wheel is the same as the steering direction of the front wheel, vehicle yaw torque generated by a steering operation may be effectively reduced to enhance traveling stability of the vehicle.

When a tire of a front wheel blows out in a traveling process of the electric vehicle, the wheel whose tire has blown out causes a tire blowout braking effect. A speed of the wheel abruptly increases, a traveling direction of the vehicle deviates, and the electric vehicle yaws towards a side of the front wheel whose tire has blown out. To ensure safety of a driver and the vehicle, steering of the two rear wheels may be adjusted through the rear-wheel steering system, so that the vehicle generates yaw control torque. Therefore, the yaw control torque offsets the yaw caused by blowout of the tire, to reduce a magnitude of the yaw of the vehicle.

The tire blowout control is performed only when the vehicle speed of the electric vehicle is greater than the preset vehicle speed, to avoid false control that might be caused by misjudgment when the vehicle starts to accelerate or runs at a low speed. The preset vehicle speed may be pre-calibrated based on a real vehicle experiment and/or model computing, or may be predetermined by comprehensively considering an overall vehicle requirement and vehicle performance.

According to the solution of this application, the yaw of the electric vehicle caused by the blowout of the tire is suppressed by adjusting the steering angles of the rear wheels, so that vehicle stability control is quickly implemented to effectively control the traveling posture of the electric vehicle upon the blowout of the tire, thereby improving the safety of the vehicle.

With reference to the first aspect, in some implementations of the first aspect, the vehicle controller is specifically configured to: after a tire of a front-left wheel of the electric vehicle blows out in the traveling process in which the vehicle speed of the electric vehicle is greater than the preset vehicle speed, control the rear-wheel steering system to adjust the rear wheels for the rear wheels to turn left.

When the tire of the front-left wheel of the electric vehicle blows out, if the driver does not perform steering wheel control, the electric vehicle generates leftward (relative to the vehicle counterclockwise) yaw torque. In this case, the vehicle controller controls the rear-wheel steering system to turn left, and then turning left by the rear wheels enables the electric vehicle to generate rightward (relative to the vehicle clockwise) yaw control torque. The yaw torque and the yaw control torque offset each other, and the magnitude of the yaw of the electric vehicle decreases.

According to the solution of this application, when the tire of the front-left wheel of the electric vehicle blows out, the rear wheels are controlled to turn left, so that the yaw of the vehicle may be effectively reduced to quickly implement vehicle stability control, thereby improving the safety of the vehicle.

With reference to the first aspect, in some implementations of the first aspect, the vehicle controller is specifically configured to: after a tire of a front-right wheel of the electric vehicle blows out in the traveling process in which the vehicle speed of the electric vehicle is greater than the preset vehicle speed, control the rear-wheel steering system to adjust the rear wheels for the rear wheels to turn right.

When the tire of the front-right wheel of the electric vehicle blows out, if the driver does not perform steering wheel control, the electric vehicle generates rightward (relative to the vehicle clockwise) yaw torque. In this case, the vehicle controller controls the rear-wheel steering system to turn right, and then turning right by the rear wheels enables the electric vehicle to generate leftward (relative to the vehicle counterclockwise) yaw control torque. The yaw torque and the yaw control torque offset each other, and the magnitude of the yaw of the electric vehicle decreases.

According to the solution of this application, when the tire of the front-right wheel of the electric vehicle blows out, the rear wheels are controlled to turn right, so that the yaw of the vehicle may be effectively reduced to quickly implement vehicle stability control, thereby improving the safety of the vehicle.

With reference to the first aspect, in some implementations of the first aspect, the vehicle controller is specifically configured to: after a tire of a front wheel of the electric vehicle blows out in a traveling process in which the vehicle speed of the electric vehicle is a first vehicle speed, control the rear-wheel steering system to adjust the rear wheels for the rear wheels to turn by a first angle; and after a tire of a front wheel of the electric vehicle blows out in a traveling process in which the vehicle speed of the electric vehicle is a second vehicle speed greater than the first vehicle speed, control the rear-wheel steering system to adjust the rear wheels for the rear wheels to turn by a second angle less than the first angle.

Both the first vehicle speed and the second vehicle speed are greater than the preset vehicle speed, and the second vehicle speed is greater than the first vehicle speed. When the vehicle speed is higher, a risk of tire blowout is higher, and impact on the vehicle posture and trajectory is greater. In this case, yaw control torque imposed by steering is also greater, and the risk is much higher. A risk of out-of-control increases as the vehicle speed increases. Therefore, when the vehicle speed is higher, the rear-wheel steering system controls the steering angles of the rear wheels to be smaller. When the tire of the electric vehicle blows out at the second vehicle speed, the rear-wheel steering system controls the rear wheels to turn by the second angle, where the second angle is less than the first angle.

According to the solution of this application, when the tire of the vehicle blows out at different vehicle speeds, the vehicle controller adjusts the steering angles of the rear wheels based on different vehicle traveling statuses, to reduce the risk of out-of-control of the vehicle, thereby effectively improving the safety of the vehicle.

With reference to the first aspect, in some implementations of the first aspect, the vehicle controller is configured to: when a tire of a front wheel of the electric vehicle blows out in the traveling process in which the vehicle speed of the electric vehicle is greater than the preset vehicle speed, control a difference between drive torque of a rear-left wheel and drive torque of a rear-right wheel of the electric vehicle to increase.

The electric vehicle may be of a distributed or centralized motor architecture, and has a plurality of drive motors. The drive motor may be a wheel-side motor or a wheel hub motor. The drive motor may independently drive a wheel of the vehicle. Therefore, for the electric vehicle having a plurality of drive motors that separately drive the rear-left wheel and the rear-right wheel, one or both of two drive motors on the left and right sides of a rear axle may be controlled to operate at the same time to generate drive torque with different values, so that torque vector control is performed by using the two rear-axle drive motors to generate additional yaw torque compensation, thereby further reducing the yaw of the entire vehicle.

In this application, the drive torque of the rear-left wheel may be understood as torque output by a drive motor that is configured to drive the rear-left wheel, and the drive torque of the rear-right wheel may be understood as torque output by a drive motor that is configured to drive the rear-right wheel. The difference between the drive torque of the rear-left wheel and the drive torque of the rear-right wheel may be understood as a difference between a value of the torque output by the drive motor configured to drive the rear-left wheel and a value of the torque output by the drive motor configured to drive the rear-right wheel.

Controlling the difference between the drive torque of the rear-left wheel and the drive torque of the rear-right wheel of the electric vehicle to increase may be: controlling the drive torque of one of the two wheels to increase and the drive torque of the other wheel to remain unchanged or decrease; or controlling an increase magnitude of the drive torque of one of the two wheels to be greater than an increase magnitude of the drive torque of the other wheel; or controlling the drive torque of one of the two wheels to decrease and the drive torque of the other wheel to remain unchanged; or controlling a decrease magnitude of the drive torque of one of the two wheels to be less than a decrease magnitude of the drive torque of the other wheel. It should be understood that, when a tire of a wheel blows out, to ensure safety of the driver and the vehicle, generally the speed of the vehicle is reduced for the vehicle to be controlled. Therefore, the difference between the drive torque of the rear-left wheel and the drive torque of the rear-right wheel is controlled to increase. Generally, the drive torque of one of the two wheels is controlled to decrease, and the drive torque of the other wheel is controlled to remain unchanged; or the decrease magnitude of the drive torque of one of the two wheels is controlled to be less than the decrease magnitude of the drive torque of the other wheel, thereby enabling the vehicle to reduce its speed while its yaw is reduced.

It should be understood that the drive torque may be a negative value. The drive motor includes a stator winding and a rotor, and output torque of the drive motor may be controlled by outputting an alternating current to the stator winding with three phases. Magnetic field intensity and a magnetic field direction of a stator may be changed by adjusting, by using a motor controller, a magnitude of a current of the stator winding and a phase of a three-phase current, to change an interaction force between the stator and the rotor, namely, the torque of the motor. In this way, the phase of the three-phase current output to the motor is changed, so that the rotor cuts a magnetic field generated by the stator winding. Kinetic energy of the rotor is converted into electric energy and input to a power battery. In this case, the motor outputs negative torque. The motor controller may increase or decrease the positive or negative torque output by the motor by changing the magnitude of the three-phase current output to the motor.

According to the solution of this application, the torque output is adjusted through the two rear-axle drive motors, to perform torque vector control to generate additional yaw compensation torque, so that the yaw of the entire vehicle is further reduced and vehicle stability control is quickly implemented to effectively control the traveling posture of the electric vehicle upon the blowout of the tire, thereby improving the safety of the vehicle.

With reference to the first aspect, in some implementations of the first aspect, the vehicle controller is specifically configured to: after the tire of the front-left wheel of the electric vehicle blows out in the traveling process in which the vehicle speed of the electric vehicle is greater than the preset vehicle speed, control the drive torque of the rear-left wheel to be greater than the drive torque of the rear-right wheel.

When the tire of the front-left wheel of the electric vehicle blows out, if the driver does not perform steering wheel control, the electric vehicle generates leftward (relative to the vehicle counterclockwise) yaw torque. In this case, the vehicle controller controls the drive torque of the rear-left wheel to be greater than the drive torque of the rear-right wheel, so that the electric vehicle generates rightward (relative to the vehicle clockwise) yaw compensation torque, thereby further reducing the yaw.

According to the solution of this application, when the tire of the front-left wheel of the electric vehicle blows out, the drive torque of the rear-left wheel is controlled to be greater than the drive torque of the rear-right wheel, so that the yaw of the vehicle may be further reduced to quickly implement vehicle stability control, thereby improving the safety of the vehicle.

With reference to the first aspect, in some implementations of the first aspect, the vehicle controller is specifically configured to: after the tire of the front-right wheel of the electric vehicle blows out in the traveling process in which the vehicle speed of the electric vehicle is greater than the preset vehicle speed, control the drive torque of the rear-right wheel to be greater than the drive torque of the rear-left wheel.

When the tire of the front-right wheel of the electric vehicle blows out, if the driver does not perform steering wheel control, the electric vehicle generates rightward (relative to the vehicle clockwise) yaw torque. In this case, the vehicle controller controls the drive torque of the rear-right wheel to be greater than the drive torque of the rear-left wheel, so that the electric vehicle generates leftward (relative to the vehicle counterclockwise) yaw compensation torque, thereby further reducing the yaw.

According to the solution of this application, when the tire of the front-right wheel of the electric vehicle blows out, the drive torque of the rear-right wheel is controlled to be greater than the drive torque of the rear-left wheel, so that the yaw of the vehicle may be further reduced to quickly implement vehicle stability control, thereby improving the safety of the vehicle.

With reference to the first aspect, in some implementations of the first aspect, the vehicle controller is configured to: after a tire of a front wheel of the electric vehicle blows out in the traveling process in which the vehicle speed of the electric vehicle is greater than the preset vehicle speed, in response to a yaw velocity of the electric vehicle being greater than a preset angular velocity, control the rear-wheel steering system to increase the steering angles of the rear wheels, and/or control the difference between the drive torque of the rear-left wheel and the drive torque of the rear-right wheel of the electric vehicle to increase.

The vehicle controller may obtain vehicle traveling and posture information by using a sensor signal, to obtain current vehicle speed information and yaw angle information of the vehicle. The vehicle controller may perform computing based on the speed of the vehicle and steering-wheel steering angle information to obtain a preset speed currently required for the vehicle to travel stably, and compare the preset speed with the yaw velocity to obtain a difference, thereby obtaining torque information required for controlling the vehicle posture. When the yaw velocity is greater than the preset angular velocity, the rear-wheel steering system is controlled to increase the steering angles of the rear wheels, and/or control the difference between the drive torque of the rear-left wheel and the drive torque of the rear-right wheel of the electric vehicle to increase, to increase the yaw control torque and/or the yaw compensation torque, thereby reducing the yaw of the vehicle.

According to the solution of this application, when it is detected that a tire of a front wheel of the vehicle blows out, steering characteristics and the traveling posture of the vehicle are adjusted by putting a rear-wheel steering function and a torque vector control function into full play, to quickly implement vehicle stability control, thereby improving the safety of the vehicle.

With reference to the first aspect, in some implementations of the first aspect, controlling the difference between the drive torque of the rear-left wheel and the drive torque of the rear-right wheel of the electric vehicle to increase includes: controlling the difference between the drive torque of the rear-left wheel and the drive torque of the rear-right wheel to be adjusted to a preset difference, where the preset difference increases as the yaw velocity of the electric vehicle increases, and the preset difference increases as a difference between the yaw velocity of the electric vehicle and the preset angular velocity increases.

When a tire of a front wheel blows out in a traveling process of the vehicle, the vehicle controller may obtain vehicle traveling and posture information by using a sensor signal, to obtain current vehicle speed information and yaw angle information of the vehicle. As an offset of the vehicle yaw velocity caused by the blowout of the tire increases, the yaw control torque required at the time of tire blowout control increases, and the momentum of the output torque difference between the left and the right drive motors increases.

According to the solution of this application, the torque difference between the two rear-axle drive motors is determined based on a change of the yaw velocity upon the blowout of the tire of the vehicle, and vehicle stability control is quickly implemented by putting torque vector control into full play, thereby improving the safety of the vehicle.

With reference to the first aspect, in some implementations of the first aspect, that after a tire of a front wheel of the electric vehicle blows out in the traveling process in which the vehicle speed of the electric vehicle is greater than the preset vehicle speed includes: in the traveling process in which the vehicle speed of the electric vehicle is greater than the preset vehicle speed, a tire pressure of the front wheel is less than a pressure threshold and/or, in preset duration, a wheel speed increment of the front wheel is greater than a wheel speed increment of another wheel.

The vehicle controller obtains, from a vehicle sensor such as a vehicle speed sensor, a steering-wheel steering angle sensor, an inertia sensor, and a tire pressure sensor, a signal that represents a traveling status of the vehicle, including a vehicle speed, a steering-wheel steering angle, a yaw velocity, and tire pressure. The vehicle controller may complete tire blowout detection and positioning of the wheel whose tire has blown out based on such signals.

When a tire of a specific wheel of the vehicle blows out, a rotational speed of a drive motor corresponding to the wheel abruptly increases, so that the wheel whose tire has blown out in the four wheels may be detected based on a change of the rotational speed of the drive motor or a change of a rotational speed of the wheel. When the tire of the wheel blows out, a pressure of the tire decreases. When the tire pressure is less than the pressure threshold, it may be determined that the tire of the wheel has blown out.

In a possible implementation, the vehicle controller may alternatively determine, when the yaw velocity of the electric vehicle is greater than a yaw threshold, that a tire of the electric vehicle has blown out.

In a possible implementation, once detecting that a tire of a wheel blows out in a traveling process of the vehicle, the vehicle controller outputs, to the driver by using a display screen, a reminder or warning signal and position information of the wheel whose tire has blown out.

According to the solution of this application, wheel tire blowout detection and identification are performed by using characteristics of a rotational speed change in the vehicle information, to shorten a tire blowout detection time and intervene with the control in a timely manner, thereby reducing a misjudgment rate and improving the safety of the vehicle.

With reference to the first aspect, in some implementations of the first aspect, the vehicle controller is further configured to: in a process of controlling the rear-wheel steering system to adjust the steering angles of the rear wheels, in response to a traveling trajectory offset of the electric vehicle being less than an offset threshold or the vehicle speed of the electric vehicle being less than a safety threshold, control the rear-wheel steering system to reduce the steering angles of the rear wheels to zero.

In a tire blowout control process, if it is detected that the traveling trajectory offset of the vehicle decreases to falling below the threshold or the vehicle speed of the electric vehicle decreases to the safety threshold, it indicates that the electric vehicle is already controllable or falls within a controllable vehicle speed threshold. The vehicle controller may gradually reduce the yaw control torque to quit the tire blowout control function, and the rear-wheel steering system gradually reduces the steering angles of the rear wheels to 0.

According to the solution of this application, after the vehicle is already controllable, the vehicle quits the tire blowout control, to prevent the vehicle from generating a yaw due to the steering angles of the rear wheels, thereby improving the safety of the vehicle.

With reference to the first aspect, in some implementations of the first aspect, the vehicle controller is further configured to: in a process of controlling the difference between the drive torque of the rear-left wheel and the drive torque of the rear-right wheel of the electric vehicle to increase, in response to a traveling trajectory offset of the electric vehicle being less than an offset threshold or the vehicle speed of the electric vehicle being less than a safety threshold, control the difference between the drive torque of the rear-left wheel and the drive torque of the rear-right wheel of the electric vehicle to decrease to zero.

In a tire blowout control process, if it is detected that the traveling trajectory offset of the vehicle decreases to falling below the threshold or the vehicle speed of the electric vehicle decreases to the safety threshold, it indicates that the electric vehicle is already controllable or falls within a controllable vehicle speed threshold. The vehicle controller may gradually reduce the yaw control torque to quit the tire blowout control function, and the vehicle controller reduces momentum of a torque difference between the drive motor on the left side and the drive motor on the right side to 0.

According to the solution of this application, after the vehicle is already controllable, the vehicle quits the tire blowout control, to prevent the vehicle from generating a yaw due to the torque difference between the drive motor on the left side and the drive motor on the right side, thereby improving the safety of the vehicle.

With reference to the first aspect, in some implementations of the first aspect, the steering angles of the rear wheels increase as a road adhesion coefficient decreases, and the difference between the drive torque of the rear-left wheel and the drive torque of the rear-right wheel decreases as the road adhesion coefficient decreases.

When the vehicle travels on a low-adhesion road surface such as a wet and slippery road surface on a rainy day or a snowy road surface, the road adhesion coefficient, a tire slip rate, and the like need to be used as an additional input signal, to correct and adjust the yaw control torque and the yaw compensation torque by using these additional parameters. A yaw velocity reference value and a steering gradient reference value of the vehicle in a current state on the low-adhesion road surface are greatly different from those on a normal high-adhesion road surface, and need to be recomputed. In addition, stress and boundary characteristics of a tire on the low-adhesion road surface vary substantially, and the yaw control torque and a rear-wheel steering threshold also vary.

According to the solution of this application, tire blowout control parameters are adjusted based on the road adhesion coefficient, to effectively improve safety of the vehicle traveling on road surfaces with different road adhesion coefficients, so that vehicle stability control is quickly implemented upon the blowout of the tire, thereby improving the safety of the vehicle.

According to a second aspect, this application provides a control method for tire blowout control of an electric vehicle. The control method is used to control a rear-wheel steering system of the electric vehicle after a tire of a front wheel of the electric vehicle blows out in a traveling process in which a vehicle speed of the electric vehicle is greater than a preset vehicle speed. The control method includes: at a first moment, detecting that a tire of a front wheel of the electric vehicle blows out, where a tire pressure of the front wheel is less than a pressure threshold and/or, in preset duration, a wheel speed increment of the front wheel is greater than a wheel speed increment of another wheel; in a first time period after the first moment, controlling the rear-wheel steering system to adjust steering angles of rear wheels; and in the first time period or at a second moment after the first time period, in response to a traveling trajectory offset of the electric vehicle being less than an offset threshold or the vehicle speed of the electric vehicle being less than a safety threshold, controlling the steering system to reduce the steering angles of the rear wheels to zero.

With reference to the second aspect, in some implementations of the second aspect, the control method further includes: in the first time period after the first moment, controlling a difference between drive torque of a rear-left wheel and drive torque of a rear-right wheel of the electric vehicle to increase; and in the first time period or at the second moment after the first time period, in response to the traveling trajectory offset of the electric vehicle being less than the offset threshold or the vehicle speed of the electric vehicle being less than the safety threshold, controlling the difference between the drive torque of the rear-left wheel and the drive torque of the rear-right wheel of the electric vehicle to decrease to zero.

With reference to the second aspect, in some implementations of the second aspect, the control method specifically includes: in the first time period after the first moment, in response to a yaw velocity of the electric vehicle being greater than a preset angular velocity, controlling the rear-wheel steering system to adjust the rear wheels for the rear wheels to turn by a preset angle, or controlling the difference between the drive torque of the rear-left wheel and the drive torque of the rear-right wheel of the electric vehicle to be adjusted to a preset difference. The preset angle decreases as the vehicle speed of the electric vehicle increases, the preset difference increases as the yaw velocity of the electric vehicle increases, and the preset difference increases as a difference between the yaw velocity of the electric vehicle and the preset angular velocity increases.

According to a third aspect, this application provides an electric vehicle. The electric vehicle includes the vehicle controller according to the first aspect and the implementations of the first aspect and a vehicle sensor. The vehicle sensor is configured to output a vehicle signal. The vehicle signal indicates a vehicle speed and a yaw velocity of the electric vehicle, and a tire pressure of each wheel of the electric vehicle.

Specifically, for beneficial effects of another aspect, refer to the beneficial effects described in the first aspect. Details are not described herein again.

**BRIEF DESCRIPTION OF DRAWINGS**

FIG. 1 is a diagram of an electric vehicle according to an embodiment of this application;
FIG. 2 is a diagram of an architecture of an electric vehicle according to an embodiment of this application;
FIG. 3 is a diagram of a vehicle controller for tire blowout control according to an embodiment of this application;
FIG. 4 is a diagram of a control method for tire blowout control according to an embodiment of this application;
FIG. 5 is a diagram of a type of tire blowout control according to an embodiment of this application; and
FIG. 6 is a diagram of another type of tire blowout control according to an embodiment of this application.

**DESCRIPTION OF EMBODIMENTS**

The following describes technical solutions of this application with reference to the accompanying drawings. Detailed descriptions and accompanying drawings of the following embodiments are used to describe principles of this application as examples, but should not be used to limit the scope of this application. In other words, this application is not limited to the described embodiments.

Tire blowout of a vehicle at a high speed is one of main reasons for causing the vehicle to be out of control and a serious traffic accident. Tires, as the only key parts of a vehicle that are directly in contact with the ground, have significant impact on power performance, braking performance, smoothness, manipulation stability, and the like of the vehicle in a traveling process of the vehicle. Once a tire of the vehicle blows out in a high-speed traveling state, dynamic characteristics of the vehicle change dramatically, a balance of the vehicle is broken, and the vehicle deviates from an original traveling trajectory. For most home vehicles, a front wheel is used as both a power wheel and a steering wheel. Once a tire of the front wheel blows out, a traveling direction and a traveling trajectory of the vehicle obviously deviate in a very short time. A driver is likely to perform a wrong operation in panic, and it is difficult to control the vehicle. When a speed of the vehicle is high and the driver does not perform steering wheel control, the traveling direction and the traveling trajectory of the vehicle deviate unexpectedly, greatly affecting traveling stability and safety of the vehicle.

In a possible implementation, a current status of the vehicle is determined, and the wheels are controlled through a braking system or a drive system, to maintain a balance of stress between a left side and a right side of the vehicle after the tire blows out, thereby controlling the traveling trajectory of the vehicle and a vehicle posture after the tire blows out.

It should be understood that, a longitudinal force is applied to the wheels, and then yaw torque is generated based on a longitudinal force difference between the left side and the right side to control the traveling posture of the vehicle, with slightly low control efficiency.

For the foregoing problem, this application provides a vehicle controller for tire blowout control, a control method for tire blowout control, and an electric vehicle. After it is detected that a tire of a front wheel blows out, steering characteristics and a traveling posture of the vehicle are adjusted based on a traveling status of the vehicle by putting a rear-wheel steering function into full play, so that vehicle stability control is quickly implemented to effectively control the electric vehicle upon blowout of the tire, thereby improving safety of the vehicle.

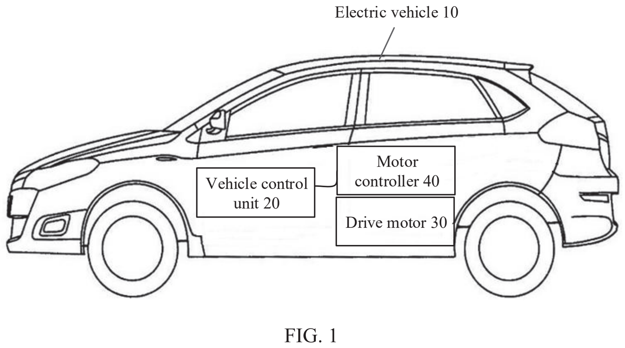

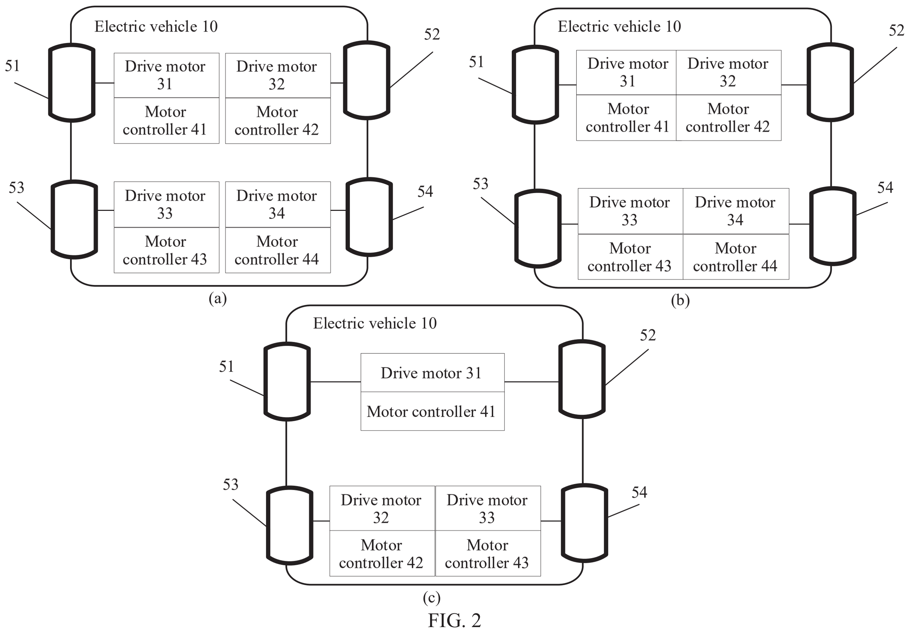

FIG. 1 and FIG. 2 are diagrams of architectures of an electric vehicle 10 according to an embodiment of this application.

As shown in FIG. 1, the electric vehicle 10 includes a vehicle control unit 20, a drive motor 30, a motor controller 40, a power battery (not shown in the figure), and a plurality of wheels. The motor controller 40 is configured to output a current to the drive motor 30, to control the drive motor 30 to output torque to drive the electric vehicle 10.

A vehicle controller 60 in this application may be the motor controller 40 of the electric vehicle 10, or the vehicle control unit 20, or a controller that is separately disposed and has a control capability.

It may be understood that the electric vehicle 10 in this embodiment of this application may specifically be any one of different types of vehicles, such as a car, a truck, and a passenger bus; or may be a transportation apparatus such as a tricycle, a two-wheel vehicle, or a train for carrying people or goods; or another type of transportation tool driven by a power battery. This is not limited in this embodiment of this application. The vehicle includes but is not limited to a pure electric vehicle (pure electric vehicle/battery electric vehicle, pure EV/-battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), a new energy vehicle (new energy vehicle, NEV), and the like.

The power battery in this embodiment of this application may be a lithium-ion battery, a lithium metal battery, a lead-acid battery, a nickel-cadmium battery, a nickel-hydrogen battery, a lithium-sulfur battery, a lithium-air battery, a sodium-ion battery, or the like. This is not limited in this application. From a perspective of a scale, the power battery in this embodiment of this application may be a battery cell, or may be a battery module or a battery pack. The power battery may further supply power to another electrical component in the vehicle, for example, an in-vehicle air conditioner or an in-vehicle player.

The electric vehicle 10 may be of a distributed drive architecture with four drive motors, where the drive motors are disposed on edges of the wheels to be driven and are controlled by separate motor controllers 40. Alternatively, the electric vehicle may be of a centralized drive architecture with drive motors, where drive motors configured to drive two front wheels or two rear wheels are disposed together. There may be one or more motor controllers 40. The motor controller 40 may be in a one-to-one correspondence with the drive motor, or one motor controller 40 may alternatively correspond to a plurality of drive motors. The motor controller 40 is configured to control one or more drive motors to output torque to drive the electric vehicle 10.

In an embodiment, as shown in (a) in FIG. 2, the electric vehicle 10 may be of a distributed drive architecture with four drive motors, where the drive motors are disposed on edges of the wheels to be driven and are controlled by separate motor controllers. The electric vehicle 10 may alternatively be of a centralized drive architecture with four motors shown in (b) in FIG. 2, where two drive motors configured to drive two front wheels or two rear wheels are disposed together.

For example, the electric vehicle 10 includes four motor controllers, and the four motor controllers include a motor controller 41, a motor controller 42, a motor controller 43, and a motor controller 44. The four motors include a drive motor 31, a drive motor 31, a drive motor 33, and a drive motor 34. The motor controller 41 controls the drive motor 31 to drive a wheel 51, the motor controller 42 controls the drive motor 32 to drive a wheel 52, the motor controller 43 controls the drive motor 33 to drive a wheel 53, and the motor controller 44 controls the drive motor 34 to drive a wheel 54.

Based on positions of the wheels, the wheels may be divided into a front-left wheel, a front-right wheel, a rear-left wheel, and a rear-right wheel. For division of the wheels based on axles, in the four wheels, the front-left wheel and the front-right wheel share a same axle and are connected through a front axle; and the rear-left wheel and the rear-right wheel share a same axle, and are connected through a rear axle. For division of the wheels based on the positions, in the four wheels, the front-left wheel and the rear-left wheel are on a same side and located on a left side; and the front-right wheel and the rear-right wheel are on a same side and located on a right side. In the four drive motors, the two drive motors configured to drive the two front wheels are drive motors sharing a same axle, and the two drive motors configured to drive the two rear wheels are also drive motors sharing a same axle.

In an embodiment, the electric vehicle 10 may alternatively be of a centralized drive motor architecture shown in (c) in FIG. 2. The two front wheels of the electric vehicle 10 are driven by using one drive motor, and the two rear wheels of the electric vehicle 10 are driven by using two drive motors respectively.

In an embodiment, the plurality of the foregoing mentioned architectures may alternatively be combined. For example, a distributed drive motor architecture is used for front drive, and a centralized drive motor architecture is used for rear drive.

The vehicle controller 60 provided in this embodiment of this application may be any one of a plurality of motor controllers.

The electric vehicle 10 further includes an accelerator pedal and a steering wheel. The accelerator pedal is configured to indicate to output torque to the wheels of the electric vehicle 10.

In an embodiment, the motor controller 40 includes a signal interface, and the motor controller 40 is connected via the signal interface to the vehicle control unit 20 and another motor controller 40. The vehicle control unit 20 is connected to the accelerator pedal in a signal manner. The vehicle control unit 20 computes a torque requirement of the entire vehicle based on an opening of the accelerator pedal in a traveling process of the electric vehicle 10, and sends a torque signal to the motor controller 40 based on the torque requirement of the entire vehicle. Each motor controller 40 controls, based on an indication of the torque signal, a corresponding drive motor to output torque to drive a corresponding wheel.

In an embodiment, each motor controller 40 may alternatively be directly connected to the accelerator pedal, and control, based on a torque signal output by the accelerator pedal, the corresponding motor to output the torque.

In an embodiment, each motor controller 40 is connected via a signal interface to a resolver sensor. The resolver sensor is configured to detect a rotational speed of the drive motor 30 controlled by the motor controller 40, and the motor controller 40 is configured to receive a signal from the resolver sensor. The motor controller 40 may further generate a rotational speed signal based on the signal from the resolver sensor, and send the rotational speed signal to the other three motor controllers 40. Similarly, each motor controller 40 also receives rotational speed signals sent by the other three motor controllers 40.

The resolver sensor may accurately detect a position, a direction, and a speed of a motor rotor, and is responsible for monitoring and extracting a rotational speed of the drive motor, with a high sampling rate. The resolver sensor is connected to the motor controller 40 straightly in a signal manner. Signal transmission time is short, and stability is higher.

In an embodiment, the motor controller 40 further obtains, via the signal interface, a vehicle signal from the vehicle control unit 20 or from another sensor of the electric vehicle 10. The vehicle signal indicates a vehicle speed and a yaw velocity of the electric vehicle 10, and a tire pressure of each wheel of the electric vehicle 10.

The electric vehicle 10 further includes a rear-wheel steering system, and the rear-wheel steering system is configured to control steering angles of rear wheels of the electric vehicle 10. The rear-wheel steering system may change rotational angles and orientations of two rear wheels, so that steering and manipulability of the vehicle may be effectively adjusted by using different steering manners. When the vehicle speed is low and a steering direction of the rear wheel is opposite to a steering direction of the front wheel, a turning radius may be reduced to improve overall manipulability and flexibility of the vehicle. When the vehicle speed is high and the steering direction of the rear wheel is the same as the steering direction of the front wheel, vehicle yaw torque generated by a steering operation may be effectively reduced to enhance traveling stability of the vehicle.

The rear-wheel steering system gives a higher control margin to the vehicle, to improve manipulability and flexibility of the vehicle traveling at a low speed and enhance stability of the vehicle traveling at a high speed, thereby reducing a risk of out-of-control of the vehicle.

The following describes in detail tire blowout detection to be performed by the vehicle controller 60 provided in this embodiment of this application.

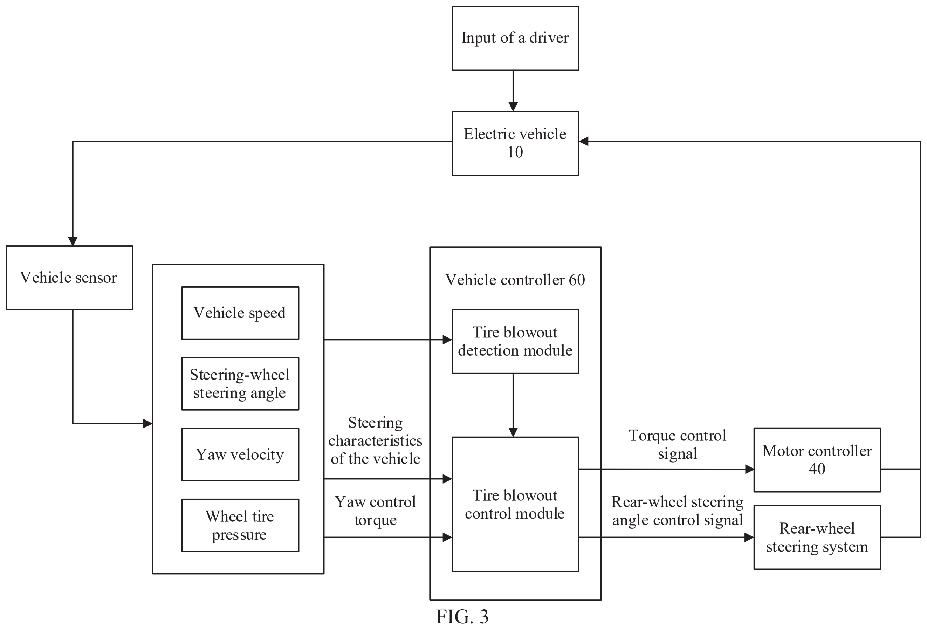

As shown in FIG. 3, in a traveling process of the electric vehicle 10, a vehicle sensor is configured to output a vehicle signal, where the vehicle signal indicates a vehicle speed and a yaw velocity of the electric vehicle 10, and a tire pressure of each wheel of the electric vehicle. The vehicle controller 60 is connected to the vehicle sensor in a signal manner, and obtains, from the vehicle sensor including but not limited to a vehicle speed sensor, a steering-wheel steering angle sensor, an inertia measurement unit (inertial measurement unit, IMU) sensor, a tire pressure sensor, and the like, a signal that represents a traveling status of the vehicle, such as the vehicle speed, a steering-wheel steering angle, the yaw velocity, and the tire pressure.

A tire pressure of a wheel whose tire has blown out abruptly decreases, and due to a tire blowout braking effect, a rotational speed of the wheel whose tire has blown out or a rotational speed of a corresponding drive motor abruptly increases. Therefore, the vehicle controller 60 may perform tire blowout detection on the vehicle based on the obtained vehicle status information.

In a possible embodiment, in a traveling process in which the vehicle speed of the electric vehicle 10 is greater than a preset vehicle speed, if a tire pressure of a front wheel is less than a pressure threshold and/or, in preset duration, a wheel speed increment of a front wheel is greater than a wheel speed increment of another wheel, it is determined that a tire of the front wheel has blown out.

In an embodiment, the preset duration is less than or equal to duration of a sampling period of the resolver sensor, and the sampling period of the resolver sensor is a time interval between two sampling moments of the resolver sensor. In an embodiment, the preset duration is a time of signal interaction between the controllers. In an embodiment, the preset duration is a period of time specified according to a requirement. The preset duration is a short period of time. When a rotational speed of a wheel on which a tire blows out increases in a short time but rotational speeds of the other wheels basically remain unchanged, the tire of the wheel may have blown out.

In a possible embodiment, if an increment of a rotational speed of any one of the four drive motors is greater than increments of rotational speeds of the other three drive motors within the preset duration, it is determined that a tire of a corresponding wheel has blown out.

In a possible embodiment, if a yaw velocity offset of the electric vehicle 10 is greater than a yaw threshold, it is determined that a tire of a wheel has blown out.

The vehicle controller 60 may further perform detection and positioning in another manner concerning whether a tire of the electric vehicle 10 has blown out. Details are not described herein again.

Tire blowout detection and control provided in this embodiment of this application is started only when the vehicle speed of the electric vehicle 10 is greater than the preset vehicle speed, to avoid misjudgment that might be made when the electric vehicle 10 accelerates upon startup or travels at a low speed, thereby improving accuracy of the tire blowout detection. For example, the preset vehicle speed may be 15 km/h or 20 km/h.

In an implementation, the vehicle controller 60 further needs to reference a traveling mode and a gear of the electric vehicle 10 to comprehensively determine the traveling status of the vehicle as a condition for enabling the tire blowout control.

In an embodiment, once detecting that a tire of a wheel blows out in a traveling process of the electric vehicle 10, the vehicle controller 60 outputs, to a driver by using a display screen, a reminder or warning signal and position information of the wheel whose tire has blown out.

The following describes in detail tire blowout control to be performed by the vehicle controller 60 provided in this embodiment of this application.

In an embodiment, the vehicle controller 60 is configured to: after a tire of a front wheel of the electric vehicle 10 blows out in a traveling process in which the vehicle speed of the electric vehicle 10 is greater than the preset vehicle speed, control the rear-wheel steering system to adjust the steering angles of the rear wheels.

When a tire of a front wheel blows out in a traveling process of the electric vehicle, the wheel whose tire has blown out causes a tire blowout braking effect. A speed of the wheel abruptly increases, a traveling direction of the vehicle deviates, and the electric vehicle yaws toward a side of the front wheel whose tire has blown out. To ensure safety of the driver and the vehicle, steering of the two rear wheels may be adjusted through the rear-wheel steering system, so that the vehicle generates yaw control torque. Therefore, the yaw control torque offsets the yaw caused by blowout of the tire, to reduce a magnitude of the yaw of the vehicle.

In an embodiment, the vehicle controller 60 is specifically configured to: after a tire of a front-left wheel of the electric vehicle 10 blows out in the traveling process in which the vehicle speed of the electric vehicle 10 is greater than the preset vehicle speed, control the rear-wheel steering system to adjust the rear wheels for the rear wheels to turn left.

In an embodiment, the vehicle controller 60 is specifically configured to: after a tire of a front-right wheel of the electric vehicle 10 blows out in the traveling process in which the vehicle speed of the electric vehicle 10 is greater than the preset vehicle speed, control the rear-wheel steering system to adjust the rear wheels for the rear wheels to turn right.

When the tire of the front-left wheel of the electric vehicle 10 blows out, if the driver does not perform steering wheel control, the electric vehicle 10 generates leftward (relative to the vehicle counterclockwise) yaw torque. In this case, the vehicle controller controls the rear-wheel steering system to turn left, and then turning left by the rear wheels enables the electric vehicle to generate rightward (relative to the vehicle clockwise) yaw control torque. The yaw torque and the yaw control torque offset each other, and the magnitude of the yaw of the electric vehicle decreases.

When the tire of the front-right wheel of the electric vehicle 10 blows out, if the driver does not perform steering wheel control, the electric vehicle 10 generates rightward (relative to the vehicle clockwise) yaw torque. In this case, the vehicle controller controls the rear-wheel steering system to turn right, and then turning right by the rear wheels enables the electric vehicle to generate leftward (relative to the vehicle counterclockwise) yaw control torque. The yaw torque and the yaw control torque offset each other, and the magnitude of the yaw of the electric vehicle decreases.

In an embodiment, the vehicle controller 60 is specifically configured to: after a tire of a front wheel of the electric vehicle 10 blows out in a traveling process in which the vehicle speed of the electric vehicle 10 is a first vehicle speed, control the rear-wheel steering system to adjust the rear wheels for the rear wheels to turn by a first angle; and after a tire of a front wheel of the electric vehicle blows out in a traveling process in which the vehicle speed of the electric vehicle is a second vehicle speed greater than the first vehicle speed, control the rear-wheel steering system to adjust the rear wheels for the rear wheels to turn by a second angle less than the first angle.

Both the first vehicle speed and the second vehicle speed are greater than the preset vehicle speed, and the second vehicle speed is greater than the first vehicle speed. When the vehicle speed is higher, a risk of tire blowout is higher, and impact on the vehicle posture and trajectory is greater. In this case, yaw control torque imposed by steering is also greater, and the risk is much higher. A risk of out-of-control increases as the vehicle speed increases. Therefore, when the vehicle speed is higher, the rear-wheel steering system controls the steering angles of the rear wheels to be smaller. When the tire of the electric vehicle blows out at the second vehicle speed, the rear-wheel steering system controls the rear wheels to turn by the second angle, where the second angle is less than the first angle.

According to the solution of this application, the yaw of the electric vehicle caused by the blowout of the tire is suppressed by adjusting the steering angles of the rear wheels, so that vehicle stability control is quickly implemented to effectively control the traveling posture of the electric vehicle upon the blowout of the tire, thereby improving the safety of the vehicle.

In an embodiment, the vehicle controller 60 is configured to: when a tire of a front wheel of the electric vehicle 10 blows out in the traveling process in which the vehicle speed of the electric vehicle 10 is greater than the preset vehicle speed, control a difference between drive torque of a rear-left wheel and drive torque of a rear-right wheel of the electric vehicle to increase.

For the electric vehicle having a plurality of drive motors that separately drive the rear-left wheel and the rear-right wheel, one or both of two drive motors on the left and right sides of a rear axle may be controlled to operate at the same time to generate drive torque with different values, so that torque vector control is performed by using the two rear-axle drive motors to generate additional yaw torque compensation, thereby further reducing the yaw of the entire vehicle.

In an embodiment, the vehicle controller 60 is specifically configured to: after the tire of the front-left wheel of the electric vehicle 10 blows out in the traveling process in which the vehicle speed of the electric vehicle 10 is greater than the preset vehicle speed, control the drive torque of the rear-left wheel to be greater than the drive torque of the rear-right wheel.

In an embodiment, the vehicle controller 60 is specifically configured to: after the tire of the front-right wheel of the electric vehicle 10 blows out in the traveling process in which the vehicle speed of the electric vehicle 10 is greater than the preset vehicle speed, control the drive torque of the rear-right wheel to be greater than the drive torque of the rear-left wheel.

When the tire of the front-left wheel of the electric vehicle blows out, if the driver does not perform steering wheel control, the electric vehicle generates leftward (relative to the vehicle counterclockwise) yaw torque. In this case, the vehicle controller controls the drive torque of the rear-left wheel to be greater than the drive torque of the rear-right wheel, so that the electric vehicle generates rightward (relative to the vehicle clockwise) yaw compensation torque, thereby further reducing the yaw.

When the tire of the front-right wheel of the electric vehicle blows out, if the driver does not perform steering wheel control, the electric vehicle generates rightward (relative to the vehicle clockwise) yaw torque. In this case, the vehicle controller controls the drive torque of the rear-right wheel to be greater than the drive torque of the rear-left wheel, so that the electric vehicle generates leftward (relative to the vehicle counterclockwise) yaw compensation torque, thereby further reducing the yaw.

In an embodiment, the vehicle controller 60 is configured to: after a tire of a front wheel of the electric vehicle 10 blows out in the traveling process in which the vehicle speed of the electric vehicle 10 is greater than the preset vehicle speed, in response to a yaw velocity of the electric vehicle 10 being greater than a preset angular velocity, control the rear-wheel steering system to increase the steering angles of the rear wheels, or control the difference between the drive torque of the rear-left wheel and the drive torque of the rear-right wheel of the electric vehicle 10 to increase.

The vehicle controller 60 may perform computing based on the speed of the vehicle and steering-wheel steering angle information to obtain a preset speed currently required for the vehicle to travel stably, and compare the preset speed with the yaw velocity to obtain a difference, thereby obtaining torque information required for controlling the vehicle posture. When the yaw velocity is greater than the preset angular velocity, the rear-wheel steering system is controlled to increase the steering angles of the rear wheels, and/or control the difference between the drive torque of the rear-left wheel and the drive torque of the rear-right wheel of the electric vehicle to increase, to increase the yaw control torque and/or the yaw compensation torque, thereby reducing the yaw of the vehicle.

In an embodiment, controlling the difference between the drive torque of the rear-left wheel and the drive torque of the rear-right wheel of the electric vehicle to increase includes: controlling the difference between the drive torque of the rear-left wheel and the drive torque of the rear-right wheel to be adjusted to a preset difference, where the preset difference increases as the yaw velocity of the electric vehicle 10 increases, and the preset difference increases as a difference between the yaw velocity of the electric vehicle 10 and the preset angular velocity increases.

As an offset of the vehicle yaw velocity caused by the blowout of the tire increases, the yaw control torque required at the time of tire blowout control increases, and momentum of an output torque difference between a left drive motor and a right drive motor increases.

In an embodiment, the steering angles of the rear wheels increase as a road adhesion coefficient decreases, and the difference between the drive torque of the rear-left wheel and the drive torque of the rear-right wheel decreases as the road adhesion coefficient decreases.

When the vehicle travels on a low-adhesion road surface such as a wet and slippery road surface on a rainy day or a snowy road surface, the road adhesion coefficient, a tire slip rate, and the like need to be used as an additional input signal, to correct and adjust the yaw control torque and the yaw compensation torque by using these additional parameters. A yaw velocity reference value and a steering gradient reference value of the vehicle in a current state on the low-adhesion road surface are greatly different from those on a normal high-adhesion road surface, and need to be recomputed. In addition, stress and boundary characteristics of a tire on the low-adhesion road surface vary substantially, and the yaw control torque and a rear-wheel steering threshold also vary.

When a tire of a front wheel blows out in a traveling process of the electric vehicle 10, the vehicle controller 60 obtains vehicle traveling and posture information by using a sensor signal, performs computing based on the speed of the vehicle and the steering-wheel steering angle information to obtain a reference yaw velocity $\gamma_{ref}$ and a steering gradient reference value $Ku_{ref}$ that are currently required for the vehicle to travel stably, and further performs computing to obtain a yaw velocity offset and a steering gradient offset.

$$\gamma_e = \gamma_{ref} - \gamma, Ku_e = Ku_{ref} - Ku$$

The foregoing two offset values are input into a PI control system as an extent of errors, to obtain required yaw control torque $Mz$ and a rear-wheel steering angle $\delta_r$.

It should be understood that, as the vehicle speed of the electric vehicle 10 is higher at the time of tire blowout, there is a higher risk of tire blowout and greater impact on the posture and the trajectory of the vehicle. As the offset of the vehicle yaw velocity caused by the blowout of the tire increases, the yaw control torque required at the time of tire blowout control increases, and the momentum of the output torque difference between the drive motors increases. As the vehicle speed of the electric vehicle 10 is higher, a rear-wheel steering angle threshold output by a rear-wheel steering angle actuator is lower.

Refer to FIG. 3 again. In a possible embodiment, the vehicle controller 60 performs computing at the same time based on completion of the tire blowout detection and the positioning of the wheel whose tire has blown out, to obtain current steering characteristics of the vehicle and the yaw control torque required for the control. If a front-axle tire blowout indication flag of the vehicle is activated, a rear-axle drive motor torque control signal and a rear-wheel steering angle control signal are immediately obtained through a tire blowout control module, and are respectively sent to the motor controller 40 and the rear-wheel steering system. The drive motor and a rear-wheel steering apparatus separately execute corresponding control instructions to control the vehicle.

In an embodiment, the vehicle controller 60 is further configured to: in a process of controlling the rear-wheel steering system to adjust the steering angles of the rear wheels, in response to a traveling trajectory offset of the electric vehicle 10 being less than an offset threshold or the vehicle speed of the electric vehicle 10 being less than a safety threshold, control the rear-wheel steering system to reduce the steering angles of the rear wheels to zero.

In an embodiment, the vehicle controller 60 is further configured to: in a process of controlling the difference between the drive torque of the rear-left wheel and the drive torque of the rear-right wheel of the electric vehicle 10 to increase, in response to a traveling trajectory offset of the electric vehicle 10 being less than an offset threshold or the vehicle speed of the electric vehicle being less than a safety threshold, control the difference between the drive torque of the rear-left wheel and the drive torque of the rear-right wheel of the electric vehicle 10 to decrease to zero.

In a tire blowout control process, if it is detected that the traveling trajectory offset of the vehicle decreases to falling below the threshold or the vehicle speed of the electric vehicle 10 decreases to the safety threshold, it indicates that the electric vehicle 10 is already controllable or falls within a controllable vehicle speed threshold. The vehicle controller 60 may gradually reduce the yaw control torque to quit the tire blowout control function, and the rear-wheel steering system gradually reduces the steering angles of the rear wheels to 0. The vehicle controller 60 reduces momentum of a torque difference between the drive motor on the left side and the drive motor on the right side to 0.

According to the solution of this application, the steering characteristics and the traveling posture of the vehicle are adjusted based on the traveling status of the vehicle by putting the rear-wheel steering function into full play, so that vehicle stability control is quickly implemented to effectively control the electric vehicle upon the blowout of the tire, thereby improving the safety of the vehicle.

This application provides a control method for tire blowout control of an electric vehicle.

The method may be applied to the electric vehicle 10.

The method includes: at a first moment, detecting that a tire of a front wheel of the electric vehicle 10 blows out, where a tire pressure of the front wheel is less than a pressure threshold and/or, in preset duration, a wheel speed increment of the front wheel is greater than a wheel speed increment of another wheel; in a first time period after the first moment, controlling the rear-wheel steering system to adjust steering angles of rear wheels; and in the first time period or at a second moment after the first time period, in response to a traveling trajectory offset of the electric vehicle 10 being less than an offset threshold or a vehicle speed of the electric vehicle being less than a safety threshold, controlling the steering system to reduce the steering angles of the rear wheels to zero.

In an embodiment, the control method further includes: in the first time period after the first moment, controlling a difference between drive torque of a rear-left wheel and drive torque of a rear-right wheel of the electric vehicle 10 to increase; and in the first time period or at the second moment after the first time period, in response to the traveling trajectory offset of the electric vehicle 10 being less than the offset threshold or the vehicle speed of the electric vehicle 10 being less than the safety threshold, controlling the difference between the drive torque of the rear-left wheel and the drive torque of the rear-right wheel of the electric vehicle 10 to decrease to zero.

In an embodiment, the control method specifically includes: in the first time period after the first moment, in response to a yaw velocity of the electric vehicle 10 being greater than a preset angular velocity, controlling the rear-wheel steering system to adjust the rear wheels for the rear wheels to turn by a preset angle, or controlling the difference between the drive torque of the rear-left wheel and the drive torque of the rear-right wheel of the electric vehicle 10 to be adjusted to a preset difference. The preset angle decreases as the vehicle speed of the electric vehicle 10 increases, the preset difference increases as the yaw velocity of the electric vehicle increases, and the preset difference increases as a difference between the yaw velocity of the electric vehicle 10 and the preset angular velocity increases.

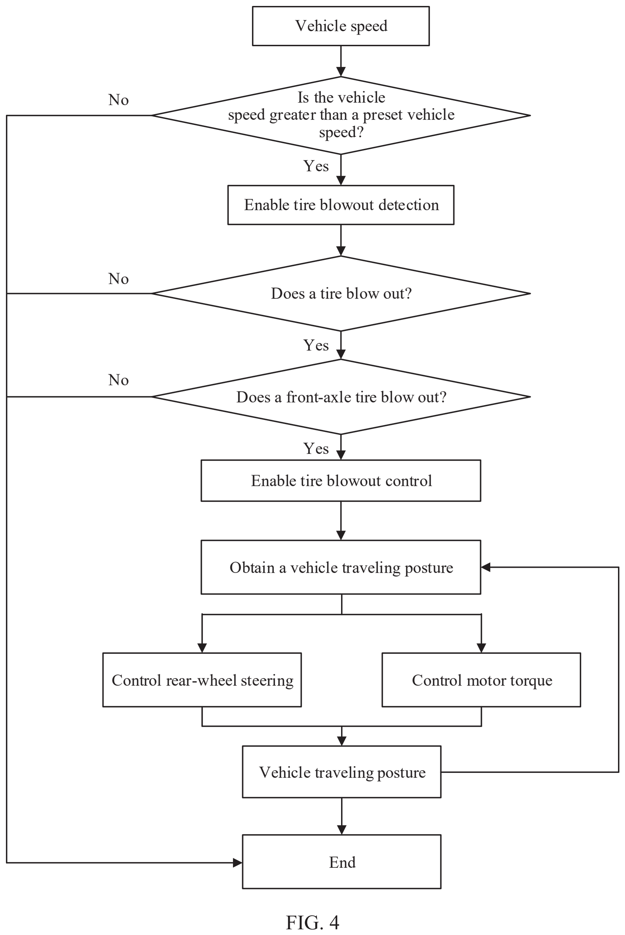

As shown in FIG. 4, the electric vehicle 10 starts tire blowout detection in a traveling process in which the vehicle speed is greater than a preset vehicle speed. When it is detected that a tire of the electric vehicle 10 blows out and the tire that has blown out is located to a wheel of a front axle, a tire blowout control function provided in this application is enabled.

A vehicle controller 60 performs rear-wheel steering control and rear-axle motor torque control based on vehicle traveling information that is obtained through a sensor, to adjust the steering angles of the rear wheels and control a torque difference between two rear-axle drive motors.

If the vehicle controller 60 detects, in a tire blowout control enabling process, that the vehicle traveling trajectory offset decreases to falling below the threshold or the vehicle speed of the vehicle decreases to falling within a safe-and-controllable vehicle speed threshold, the vehicle controller 60 gradually reduces yaw control torque to quit the tire blowout control function, and gradually reduces momentum of a torque difference between a drive motor on a left side and a drive motor on a right side to 0; and a rear-wheel steering controller also gradually reduces a rear-wheel steering angle to 0.

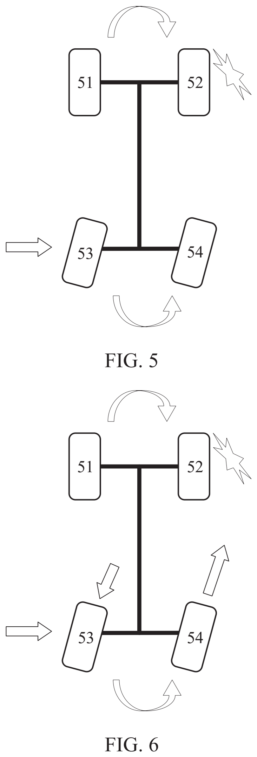

For example, tire blowout control of the front wheels is implemented through rear-wheel steering. FIG. 5 shows a case in which a tire of a front-right wheel 52 blows out in a traveling process of the electric vehicle 10. The rear wheels may still maintain good operation characteristics. In this case, the vehicle controller 60 may obtain yaw velocity information of the entire vehicle by using a sensor, and operate the rear wheels to perform steering, to generate yaw compensation torque to offset a yaw of the vehicle caused by blowout of the tire.

The blowout of the front-right wheel 52 causes the electric vehicle to yaw rightward. After identifying the rightward yaw of the electric vehicle 10, the vehicle controller 60 controls a rear-left wheel 53 and a rear-right wheel 54 to turn right, to generate rightward yaw control torque for reducing a magnitude of the yaw of the vehicle, thereby implementing vehicle stability control.

For another example, tire blowout control of the front wheels is implemented through rear-wheel steering in combination with torque vector control. FIG. 6 shows a case in which a tire of a front-right wheel 52 blows out in a traveling process of the electric vehicle 10. In this case, the vehicle controller 60 may obtain yaw velocity information of the entire vehicle by using a sensor, and operate the rear wheels to perform steering to generate yaw compensation torque to offset a yaw of the vehicle caused by blowout of the tire. At the same time, torque vector control of two rear-axle motors is performed to apply additional yaw compensation torque, to further reduce the yaw of the entire vehicle and maintain stability of the vehicle.

According to the solution of this application, the yaw of the electric vehicle caused by the blowout of the tire is suppressed by adjusting the steering angles of the rear wheels, and the torque output is adjusted by using the two rear-axle drive motors, so that torque vector control is performed to generate the additional yaw compensation torque. In this way, the yaw of the entire vehicle is further reduced and vehicle stability control is quickly implemented to effectively control the traveling posture of the electric vehicle upon the blowout of the tire, thereby improving the safety of the vehicle.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A vehicle controller for tire blowout control, wherein the vehicle controller is used in an electric vehicle, the electric vehicle comprises a rear-wheel steering system, and the rear-wheel steering system is configured to control steering angles of rear wheels of the electric vehicle; and
the vehicle controller is configured to:
after a tire of a front wheel of the electric vehicle blows out in a traveling process in which a vehicle speed of the electric vehicle is greater than a preset vehicle speed, control the rear-wheel steering system to adjust the steering angles of the rear wheels.

2. The vehicle controller according to claim 1, wherein the vehicle controller is specifically configured to:
after a tire of a front-left wheel of the electric vehicle blows out in the traveling process in which the vehicle speed of the electric vehicle is greater than the preset vehicle speed, control the rear-wheel steering system to adjust the rear wheels for the rear wheels to turn left.

3. The vehicle controller according to claim 1 or 2, wherein the vehicle controller is specifically configured to:
after a tire of a front-right wheel of the electric vehicle blows out in the traveling process in which the vehicle speed of the electric vehicle is greater than the preset vehicle speed, control the rear-wheel steering system to adjust the rear wheels for the rear wheels to turn right.

4. The vehicle controller according to claim 2, wherein the vehicle controller is specifically configured to:

after a tire of a front wheel of the electric vehicle blows out in a traveling process in which the vehicle speed of the electric vehicle is a first vehicle speed, control the rear-wheel steering system to adjust the rear wheels for the rear wheels to turn by a first angle; and
after a tire of a front wheel of the electric vehicle blows out in a traveling process in which the vehicle speed of the electric vehicle is a second vehicle speed greater than the first vehicle speed, control the rear-wheel steering system to adjust the rear wheels for the rear wheels to turn by a second angle less than the first angle.

**5.** The vehicle controller according to claim 1, wherein the vehicle controller is configured to:
after a tire of a front wheel of the electric vehicle blows out in the traveling process in which the vehicle speed of the electric vehicle is greater than the preset vehicle speed, control a difference between drive torque of a rear-left wheel and drive torque of a rear-right wheel of the electric vehicle to increase.

**6.** The vehicle controller according to claim 5, wherein the vehicle controller is specifically configured to:

after a tire of a front-left wheel of the electric vehicle blows out in the traveling process in which the vehicle speed of the electric vehicle is greater than the preset vehicle speed, control the drive torque of the rear-left wheel to be greater than the drive torque of the rear-right wheel;
after a tire of a front-right wheel of the electric vehicle blows out in the traveling process in which the vehicle speed of the electric vehicle is greater than the preset vehicle speed, control the drive torque of the rear-right wheel to be greater than the drive torque of the rear-left wheel.

**7.** The vehicle controller according to any one of claims 1 to 6, wherein the vehicle controller is configured to:
after a tire of a front wheel of the electric vehicle blows out in the traveling process in which the vehicle speed of the electric vehicle is greater than the preset vehicle speed, in response to a yaw velocity of the electric vehicle being greater than a preset angular velocity, control the rear-wheel steering system to increase the steering angles of the rear wheels, or control the difference between the drive torque of the rear-left wheel and the drive torque of the rear-right wheel of the electric vehicle to increase to a preset difference, wherein the preset difference increases as the yaw velocity of the electric vehicle increases, and the preset difference increases as a difference between the yaw velocity of the electric vehicle and the preset angular velocity increases.

**8.** The vehicle controller according to claim 1, wherein that after a tire of a front wheel of the electric vehicle blows out in the traveling process in which the vehicle speed of the electric vehicle is greater than the preset vehicle speed comprises:
in the traveling process in which the vehicle speed of the electric vehicle is greater than the preset vehicle speed, a tire pressure of the front wheel is less than a pressure threshold and/or, in preset duration, a wheel speed increment of the front wheel is greater than a wheel speed increment of another wheel.

**9.** The vehicle controller according to claim 1, wherein the vehicle controller is further configured to:
in a process of controlling the rear-wheel steering system to adjust the steering angles of the rear wheels, in response to a traveling trajectory offset of the electric vehicle being less than an offset threshold or the vehicle speed of the electric vehicle being less than a safety threshold, control the rear-wheel steering system to reduce the steering angles of the rear wheels to zero.

**10.** The vehicle controller according to claim 5, wherein the vehicle controller is further configured to:
in a process of controlling the difference between the drive torque of the rear-left wheel and the drive torque of the rear-right wheel of the electric vehicle to increase, in response to a traveling trajectory offset of the electric vehicle being less than an offset threshold or the vehicle speed of the electric vehicle being less than a safety threshold, control the difference between the drive torque of the rear-left wheel and the drive torque of the rear-right wheel of the electric vehicle to decrease to zero.

**11.** The vehicle controller according to claim 6, wherein the steering angles of the rear wheels increase as a road adhesion coefficient decreases, and the difference between the drive torque of the rear-left wheel and the drive torque of the rear-right wheel decreases as the road adhesion coefficient decreases.

**12.** A control method for tire blowout control of an electric vehicle, wherein the control method is used to control a rear-wheel steering system of the electric vehicle after a tire of a front wheel of the electric vehicle blows out in a traveling process in which a vehicle speed of the electric vehicle is greater than a preset vehicle speed, and the control method comprises:

at a first moment, detecting that a tire of a front wheel of the electric vehicle blows out, wherein a tire pressure of the front wheel is less than a pressure threshold and/or, in preset duration, a wheel speed increment of the front wheel is greater than a wheel speed increment of another wheel;
in a first time period after the first moment, controlling the rear-wheel steering system to adjust steering angles of the rear wheels; and
in the first time period or at a second moment after the first time period, in response to a traveling trajectory offset of the electric vehicle being less than an offset threshold or the vehicle speed of the electric vehicle being less than a safety threshold, controlling the steering system to reduce the steering angles of the rear wheels to zero.

**13.** The control method according to claim 12, wherein the control method further comprises:

in the first time period after the first moment, controlling a difference between drive torque of a rear-left wheel and drive torque of a rear-right wheel of the electric vehicle to increase; and
in the first time period or at the second moment after the first time period, in response to the traveling trajectory offset of the electric vehicle being less than the offset threshold or the vehicle speed of the electric vehicle being less than the safety threshold, controlling the difference between the drive torque of the rear-left wheel and the drive torque of the rear-right wheel of the electric vehicle to decrease to zero.

14. The control method according to claim 13, wherein the control method specifically comprises:

in the first time period after the first moment, in response to a yaw velocity of the electric vehicle being greater than a preset angular velocity, controlling the rear-wheel steering system to adjust the rear wheels for the rear wheels to turn by a preset angle, or controlling the difference between the drive torque of the rear-left wheel and the drive torque of the rear-right wheel of the electric vehicle to be adjusted to a preset difference, wherein
the preset angle decreases as the vehicle speed of the electric vehicle increases, the preset difference increases as the yaw velocity of the electric vehicle increases, and the preset difference increases as a difference between the yaw velocity of the electric vehicle and the preset angular velocity increases.

15. An electric vehicle, wherein the electric vehicle comprises the vehicle controller according to any one of claims 1 to 11 and a vehicle sensor; the vehicle sensor is configured to output a vehicle signal; and the vehicle signal indicates a vehicle speed and a yaw velocity of the electric vehicle, and a tire pressure of each wheel of the electric vehicle.

FIG. 1

Electric vehicle 10

| | |
|---|---|
| Drive motor 31 | Drive motor 32 |
| Motor controller 41 | Motor controller 42 |

| | |
|---|---|
| Drive motor 33 | Drive motor 34 |
| Motor controller 43 | Motor controller 44 |

51

52

53

54

(a)

Electric vehicle 10

| | |
|---|---|
| Drive motor 31 | Drive motor 32 |
| Motor controller 41 | Motor controller 42 |

| | |
|---|---|
| Drive motor 33 | Drive motor 34 |
| Motor controller 43 | Motor controller 44 |

51

52

53

54

(b)

Electric vehicle 10

| |
|---|
| Drive motor 31 |
| Motor controller 41 |

| | |
|---|---|
| Drive motor 32 | Drive motor 33 |
| Motor controller 42 | Motor controller 43 |

51

52

53

54

(c)

FIG. 2

Input of a driver

Electric vehicle
10

Vehicle sensor

Vehicle controller 60

| Vehicle speed |
| Steering-wheel steering angle |
| Yaw velocity |
| Wheel tire pressure |

Tire blowout detection module

Steering characteristics of the vehicle

Yaw control torque

Tire blowout control module

Torque control signal

Motor controller 40

Rear-wheel steering angle control signal

Rear-wheel steering system

FIG. 3

```
                          ┌─────────────────────┐
                          │    Vehicle speed    │
                          └─────────────────────┘
                                     │
                                     ▼
                    ╱────────────────────────────────╲
          No       ╱           Is the vehicle          ╲
    ◄──────────── ╲  speed greater than a preset vehicle ╱
                   ╲              speed?                ╱
                    ╲────────────────────────────────╱
                                     │ Yes
                                     ▼
                          ┌─────────────────────────┐
                          │ Enable tire blowout     │
                          │       detection         │
                          └─────────────────────────┘
                                     │
                                     ▼
                    ╱────────────────────────────────╲
          No       ╱                                  ╲
    ◄──────────── ╲      Does a tire blow out?        ╱
                   ╲                                  ╱
                    ╲────────────────────────────────╱
                                     │ Yes
                                     ▼
                    ╱────────────────────────────────╲
          No       ╱                                  ╲
    ◄──────────── ╲  Does a front-axle tire blow out? ╱
                   ╲                                  ╱
                    ╲────────────────────────────────╱
                                     │ Yes
                                     ▼
                          ┌─────────────────────────┐
                          │ Enable tire blowout     │
                          │        control          │
                          └─────────────────────────┘
                                     │
                                     ▼
                   ┌──────────────────────────────────┐
                   │ Obtain a vehicle traveling posture│◄──┐
                   └──────────────────────────────────┘   │
                          │                    │          │
                          ▼                    ▼          │
              ┌────────────────────┐  ┌──────────────────┐│
              │ Control rear-wheel │  │  Control motor   ││
              │      steering      │  │      torque      ││
              └────────────────────┘  └──────────────────┘│
                          │                    │          │
                          └─────────┬──────────┘          │
                                    ▼                      │
                          ┌─────────────────────────┐      │
                          │ Vehicle traveling posture├──────┘
                          └─────────────────────────┘
                                     │
                                     ▼
                          ┌─────────────────────────┐
                          │           End           │
                          └─────────────────────────┘
```

FIG. 4

FIG. 5

FIG. 6

Europäisches
Patentamt

European
Patent Office

Office européen
des brevets

## EUROPEAN SEARCH REPORT

**Application Number**

EP 25 21 9169

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | CN 105 799 548 A (UNIV JILIN)<br>27 July 2016 (2016-07-27)<br>* paragraphs [0010] - [0015], [0033], [0035]; figures 4,5 * | 1-10, 12-15<br><br>11 | INV.<br>B60W10/08<br>B60C23/00<br>B60K1/02<br>B60K7/00 |
| X<br><br>Y | CN 118 928 362 A (GEELY HOLDING GROUP CO LTD ET AL.) 12 November 2024 (2024-11-12)<br>* paragraphs [0036], [0039], [0040], [0065], [0075] - [0079], [0083], [0102], [0108] * | 1-4,7-9, 12,15<br><br>11 | B60W10/20<br>B60W50/02<br>B60W50/029<br>B62D7/14 |
| X<br><br>Y | CN 114 312 747 A (SHUFLER TECH STOCK TWO IN ONE COMPANY) 12 April 2022 (2022-04-12)<br>* paragraphs [0023], [0032], [0048], [0049], [0056], [0057], [0061], [0062], [0064], [0065]; figures 4,7a * | 1-10, 12-15<br><br>11 | |

**TECHNICAL FIELDS SEARCHED (IPC)**

B60W
B60K
B60C
B62D

The present search report has been drawn up for all claims

| Place of search | Date of completion of the search | Examiner |
|---|---|---|
| Munich | 18 March 2026 | Rameau, Pascal |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 9169

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2026

| Patent document cited in search report | | Publication date | Patent family member(s) | Publication date |
|---|---|---|---|---|
| CN 105799548 | A | 27-07-2016 | NONE | |
| CN 118928362 | A | 12-11-2024 | NONE | |
| CN 114312747 | A | 12-04-2022 | NONE | |

EPO FORM P0459

For more details about this annex : see Official Journal of the European Patent Office, No. 12/82